# EUROPEAN PATENT APPLICATION

(11) **EP 4 573 864 A1**
(43) Date of publication of application: **25.06.2025**
(21) Application number: 24216430.9
(22) Date of filing: 29.11.2024
(51) Int. Cl.: A01B 69/00, B62D 51/00, E02F 9/20

(54) **WORK VEHICLE**

(30) Priority: 14.12.2023 JP 2023211024
(71) Applicant: Yanmar Holdings Co., Ltd., Osaka-shi, Osaka (JP)
(72) Inventor: KODAMA, Maroi, Okayama (JP); SUZUKI, Shogo, Okayama (JP); ISHIDA, Tomoki, Okayama (JP)
(74) Representative: Novagraaf International SA

(57) **Abstract**

[Problem] To provide a technique capable of lessening a feeling of fatigue and reducing erroneous operations in remote operations.

[Solution] A work vehicle includes: a traveling machine body; a work machine connected to the traveling machine body; a remote operation device that operates the traveling machine body; and an operation portion capable of setting a direction of a forward operation of the remote operation device to either a first direction from the work machine toward the traveling machine body or a second direction from the traveling machine body toward the work machine.

## Description

### TECHNICAL FIELD

The present invention relates to a work vehicle.

### BACKGROUND ART

Patent Document 1 discloses a work machine including a traveling machine body, a work device, and a remote operation device. The traveling machine body travels by being remotely operated by the remote operation device. The work device is mounted on the traveling machine body and performs work along with traveling of the traveling machine body.

### PRIOR ART DOCUMENT

### PATENT DOCUMENT

Patent Document 1: Japanese Unexamined Patent Publication No. 2015-168395

### SUMMARY OF INVENTION

### TECHNICAL PROBLEM

Incidentally, the positional relationship between the traveling machine body and the work device with respect to a traveling direction of work may vary depending on the type of the work device. For example, there are a case where the work device is positioned closer to the traveling direction of work than the traveling machine body and a case where the work device is positioned farther from the traveling direction of work than the traveling machine body. If the attachment position between the traveling machine body and the work device is the same in both cases, in one of the cases, the work has to be performed while the traveling machine body is moved backward. In backward work, a direction of a backward operation in the remote operation device is the traveling direction of work. That is, since a direction of a forward operation is opposite to the traveling direction of work, an operator is likely to be confused and erroneous operations are likely to occur. Moreover, since the operator carefully performs an operation in order to accurately perform work, the operator may easily feel a feeling of fatigue.

The present invention has been made to solve the above problems, and an object of the present invention is to provide a technique capable of lessening a feeling of fatigue and reducing erroneous operations in remote operations.

### SOLUTION TO PROBLEM

A work vehicle according to one aspect of the present invention includes: a traveling machine body; a work machine connected to the traveling machine body; a remote operation device that operates the traveling machine body; and an operation portion capable of setting a direction of a forward operation of the remote operation device to either a first direction from the work machine toward the traveling machine body or a second direction from the traveling machine body toward the work machine.

### ADVANTAGEOUS EFFECTS OF INVENTION

According to the above configuration, a feeling of fatigue can be lessened, and erroneous operations can be reduced in remote operations.

### BRIEF DESCRIPTION OF DRAWINGS

FIG. 1 is a diagram illustrating a schematic configuration of a work vehicle according to an embodiment of the present invention.
FIG. 2 is a perspective view illustrating a configuration of a machine body portion of the work vehicle as viewed from a right front side.
FIG. 3 is a perspective view illustrating the configuration of the machine body portion as viewed from a left back side.
FIG. 4 is a block diagram schematically illustrating a configuration related to control of the work vehicle.
FIG. 5 is a plan view illustrating a configuration of a remote operation device included in the work vehicle.
FIG. 6 is an explanatory diagram for describing a forward work mode among work modes of the work vehicle.
FIG. 7 is an explanatory diagram for describing a backward work mode among the work modes.
FIG. 8 is an explanatory diagram for describing a setting operation of the forward work mode.
FIG. 9 is an explanatory diagram for describing the setting operation of the backward work mode.
FIG. 10 is a flowchart illustrating a flow of a switching setting of the work mode.
FIG. 11 is a plan view illustrating a modification of the configuration of the remote operation device.
FIG. 12 is a diagram illustrating a modification of the configuration of the machine body portion.
FIG. 13 is an explanatory diagram for describing a steering operation when a steering portion of the machine body portion is arranged at a getting-in operation position.
FIG. 14 is an explanatory diagram for describing the steering operation when the steering portion is arranged at a getting-out operation position.

### DESCRIPTION OF EMBODIMENTS

Embodiments of the present invention will be described below with reference to the drawings.

### [1. Schematic Configuration of Work Vehicle]

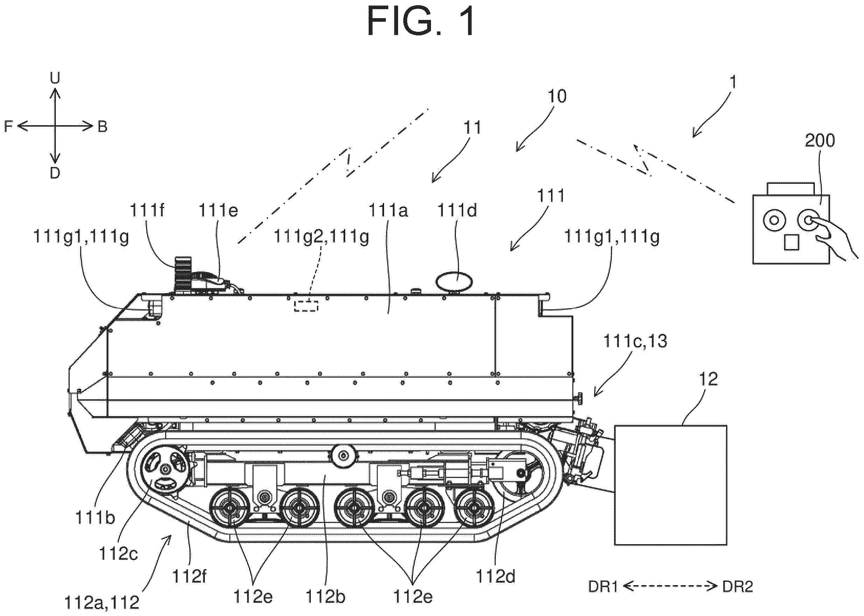

FIG. 1 is a diagram illustrating a schematic configuration of a work vehicle 1 according to an embodiment of the present invention. The work vehicle 1 is used to perform work such as agricultural work and construction work. The work vehicle 1 includes a vehicle body 10 and a remote operation device 200 provided separately from the vehicle body 10.

The remote operation device 200 (also referred to as a remote control device) enables an operator at a position away from the vehicle body 10 to operate the vehicle body 10. That is, the vehicle body 10 is remotely operated by the remote operation device 200. The configuration of the remote operation device 200 will be described below.

In addition, the work vehicle 1 is configured to be capable of traveling even in automatic traveling. That is, the work vehicle 1 is configured to be switchable between traveling by a remote operation (also referred to as manual traveling) and automatic traveling. The automatic traveling means that, in the work vehicle 1, at least steering is autonomously (automatically) performed along a predetermined route (also referred to as a travel route). The automatic traveling may have a configuration in which, in addition to steering, for example, at least one of adjustment of the traveling speed and work by a work machine 12 to be described below is autonomously performed. The configuration of the work vehicle 1 is not limited to the above. For example, the work vehicle 1 may be configured to be capable of traveling by a remote operation while excluding automatic traveling.

The vehicle body 10 includes a traveling machine body 11 that travels on the ground, the work machine 12 that performs various types of work, and a hitch portion 13 that enables the work machine 12 to be connected to the traveling machine body 11. That is, the work vehicle 1 includes the traveling machine body 11, the work machine 12, and the hitch portion 13.

Here, directions used in the explanation (in particular, directions related to the vehicle body 10) are defined as follows. One side in one direction when the traveling machine body 11 travels straight along the one direction is referred to as "front," and the other side is referred to as "back." In a direction in which the traveling machine body 11 travels straight along one direction, a side on which the hitch portion 13 is not arranged is referred to as "front," and an opposite side (a side on which the hitch portion 13 is arranged) is referred to as "back." Moreover, a left side and a right side from the back side toward the front side are defined as "left" and "right," respectively. Furthermore, a gravity direction perpendicular to the front-back direction and the left-right direction is defined as an up-down direction, and an upstream side and a downstream side in the gravity direction are defined as "up" and "down," respectively. In the drawings, the front side, the back side, the right side, the left side, the upside, and the downside are denoted by the symbols "F," "B," "R," "L," "U," and "D," respectively, as necessary. These directions are names merely used for the explanation and are not intended to limit the actual positional relationships and directions.

The hitch portion 13 is configured to include a work machine drive device 111c to be described below. The work machine 12 is arranged behind the hitch portion 13. Therefore, the work machine 12 is arranged side by side in the front-back direction with respect to the traveling machine body 11. Moreover, the work machine 12 is attached to the traveling machine body 11 via the hitch portion 13 so as to be able to be lifted and lowered. That is, the work machine 12 is connected to the traveling machine body 11 by the hitch portion 13.

The work machine 12 is attached to the hitch portion 13 so as to be replaceable. That is, various types of the work machines 12 can be attached. The work machine 12 is, for example, a tiller, a plow, a ridging device, a fertilizing device, an agricultural chemical spraying device, a harvesting device, a mowing device (also referred to as a cutting device), a snow removing device, or an earth removing device.

A traveling direction of work may be a first direction DR1 or a second direction DR2 depending on the type of the work machine 12. The first direction DR1 is a direction from the work machine 12 toward the traveling machine body 11, and the second direction DR2 is a direction from the traveling machine body 11 toward the work machine 12 (refer to the dashed arrow in FIG. 1). In the present embodiment, the first direction DR1 corresponds to the front side of the traveling machine body 11, and the second direction DR2 corresponds to the back side of the traveling machine body 11.

For example, when the work machine 12 is a tiller, that is, when a tiller is connected to the back side of the traveling machine body 11, work is performed while the work machine 12 is moved in the first direction DR1. In this case, since the traveling machine body 11 moves forward, the work performed while the work machine 12 is moved in the first direction DR1 is referred to as forward work. In the forward work, the traveling machine body 11 is positioned closer to the traveling direction of the work (that is, the first direction DR1) than the work machine 12. The type of the work machine 12 in which the forward work is performed is, for example, a plow, a ridging device, a fertilizing device, an agricultural chemical spraying device, a harvesting device, or a mowing device, in addition to a tiller.

In contrast, when the work machine 12 is a snow removing device, that is, when a snow removing device is connected to the back side of the traveling machine body 11, work is performed while the work machine 12 is moved in the second direction DR2. In this case, since the traveling machine body 11 moves backward, the work performed while the work machine 12 is moved in the second direction DR2 is referred to as backward work. In the backward work, the work machine 12 is positioned closer to the traveling direction of the work (that is, the second direction DR2) than the traveling machine body 11. Therefore, the positional relationship between the traveling machine body 11 and the work machine 12 during work differs between the forward work and the backward work. In other words, the positional relationship between the traveling machine body 11 and the work machine 12 during work may vary depending on the type of the work machine 12. The type of the work machine 12 in which the backward work is performed is, for example, a mowing device or an earth removing device, in addition to a snow removing device.

The work vehicle 1 has, as a work mode, a forward work mode corresponding to the forward work and a backward work mode corresponding to the backward work. Details of the work mode will be described below.

In the present embodiment, the work machine 12 is connected to the back side of the traveling machine body 11, but the present invention can also be applied to the work vehicle 1 in which the work machine 12 is connected to the front side of the traveling machine body 11. In this case, the forward work and the backward work are switched. More specifically, for example, when a tiller is connected to the front side of the traveling machine body 11, the work is performed while the work machine 12 is moved in the first direction DR1. At this time, the traveling machine body 11 moves backward. Thus, the work performed while the work machine 12 is moved in the first direction DR1 is also referred to as the backward work. On the other hand, when a snow removing device is connected to the front side of the traveling machine body 11, the work is performed while the work machine 12 is moved in the second direction DR2.
At this time, the traveling machine body 11 moves forward. Thus, the work performed while the work machine 12 is moved in the second direction DR2 is also referred to as the forward work. In other words, in this case, the first direction DR1 corresponds to the back side of the traveling machine body 11, and the second direction DR2 corresponds to the front side of the traveling machine body 11.

The traveling machine body 11 includes a machine body portion 111 and a traveling portion 112 arranged below the machine body portion 111.

The machine body portion 111 includes an outer cover 111a, a traveling drive device 111b arranged on the inner front side covered by the outer cover 111a, and the work machine drive device 111c arranged on the inner back side covered by the outer cover 111a.

The traveling drive device 111b includes a drive source and a power transmission mechanism that transmits power from the drive source to the traveling portion 112. In the present embodiment, the drive source included in the traveling drive device 111b is an electric motor. The drive source included in the traveling drive device 111b may be other than the electric motor, and may be, for example, an engine.

The work machine drive device 111c includes a drive source and a power take off (PTO) power transmission portion that can transmit power from the drive source to the outside of the traveling machine body 11. In the present embodiment, the drive source included in the work machine drive device 111c is an electric motor. The drive source included in the work machine drive device 111c may be other than the electric motor, and may be, for example, an engine. In addition, although the electric motor included in the work machine drive device 111c and the electric motor included in the traveling drive device 111b are different, the electric motor (drive source) may be shared by the traveling drive device 111b and the work machine drive device 111c.

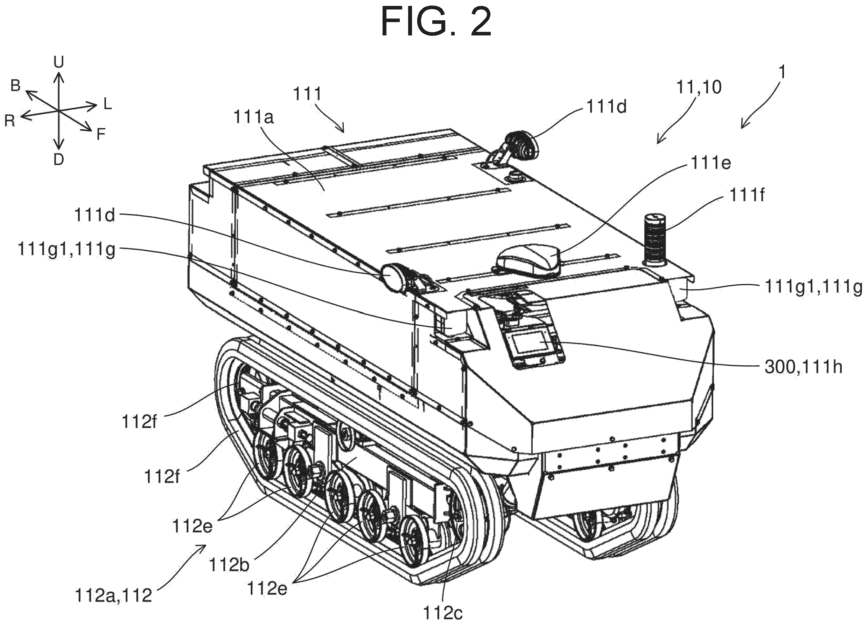

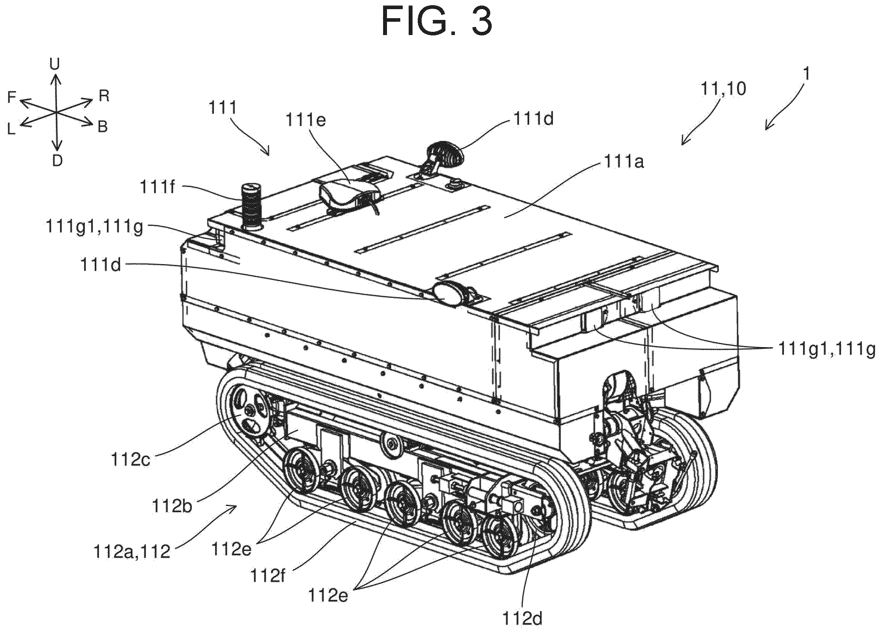

In addition to the outer cover 111a, the traveling drive device 111b, and the work machine drive device 111c, a plurality of devices are arranged in the machine body portion 111. More details are as follows. FIG. 2 is a perspective view illustrating a configuration of the machine body portion 111 as viewed from a right front side. FIG. 3 is a perspective view illustrating the configuration of the machine body portion 111 as viewed from a left back side. In FIG. 2, for the sake of convenience, a portion of the outer cover 111a, which is provided above an in-vehicle operation device 111h to be described below, is not illustrated.
A light 111d, a positioning antenna 111e, a state indication light 111f, a notification portion 111g, and the in-vehicle operation device 111h are arranged in the machine body portion 111.

The light 111d is arranged on the upper surface of the machine body portion 111, and is configured by using a light emitting diode (LED) as a light source. The configuration of the light 111d is not limited to the above, and, for example, an incandescent lamp may be used as a light source. In the present embodiment, two lights 111d are provided. One of the two lights 111d is attached to the right front side of the upper surface of the machine body portion 111 and illuminates the right side of the traveling machine body 11. The other of the two lights 111d is attached to the left back side of the upper surface of the machine body portion 111 and illuminates the left side of the traveling machine body 11. The number of the lights 111d is not limited to the above, and may be, for example, one, or three or more.

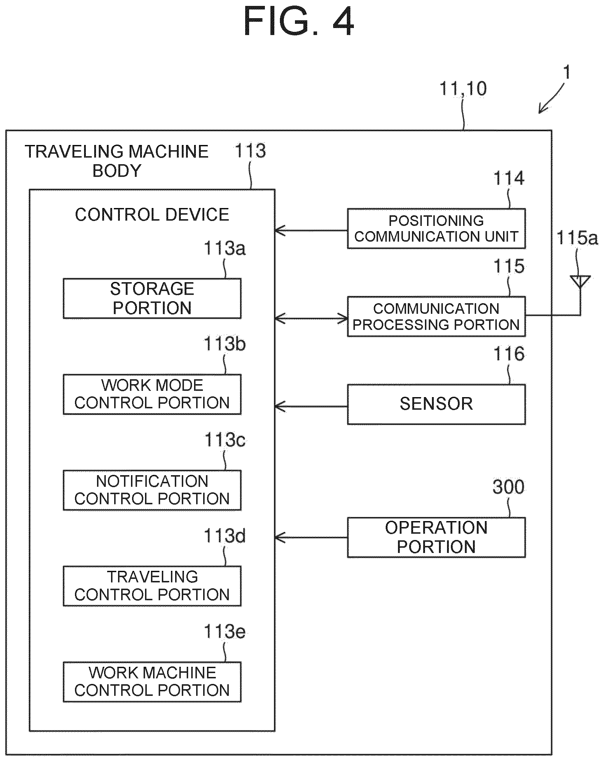

The positioning antenna 111e is arranged on the upper surface of the machine body portion 111. More specifically, the positioning antenna 111e is arranged on the front side of the upper surface of the machine body portion 111 and substantially at the center in the left-right direction. The positioning antenna 111e is included in a positioning communication unit 114 to be described below (refer to FIG. 4), and receives a positioning signal from a positioning satellite. The positioning communication unit 114 performs positioning by using the received positioning signal. The positioning performed by the positioning communication unit 114 will be described below.

The state indication light 111f is arranged on the left front side of the upper surface of the machine body portion 111. The state indication light 111f is configured by stacking a plurality of indication lights. The state indication light 111f gives notice of the state of the work vehicle 1. For example, the state indication light 111f gives notice of the state of communication between the traveling machine body 11 and the remote operation device 200.

The notification portion 111g gives notice of information about a setting related to the remote operation device 200. The information notified by the notification portion 111g will be described below. The notification portion 111g includes a first notification portion 111g1 that gives notice by visual means and a second notification portion 111g2 (refer to FIG. 1) that gives notice by auditory means. That is, the traveling machine body 11 includes the first notification portion 111g1 and the second notification portion 111g2 that give notice by means different from each other.

The first notification portion 111g1 is configured by a lamp using an incandescent lamp as a light source, but is not limited thereto. For example, the first notification portion 111g1 may be configured by a lamp using an LED as a light source. In addition, the first notification portion 111g1 may be configured by a liquid crystal display device, an organic EL display device, or the like, and may give notice by various displays (for example, a graphic, a symbol, a character, or a combination thereof).

The first notification portions 111g1 are provided on the front side and the back side of the machine body portion 111. More specifically, in particular, as illustrated in FIG. 2, the first notification portions 111g1 are arranged on the left side and the right side on the front side of the machine body portion 111. In particular, as illustrated in FIG. 3, the first notification portions 111g1 are arranged side by side in the left-right direction near the center in the left-right direction on the back side of the machine body portion 111. The arrangement positions of the first notification portions 111g1 are not limited to the above, and the first notification portions 111g1 may be arranged at positions easily visually recognized by the operator who is positioned away from the vehicle body 10. For example, the first notification portions 111g1 may be arranged on the upper surface of the machine body portion 111. In addition, the number of the first notification portions 111g1 is not limited to the above. For example, one first notification portion 111g1 may be provided on the front side of the machine body portion 111, and another first notification portion 111g1 may be provided on the back side of the machine body portion 111.

The second notification portion 111g2 is configured by a speaker, but is not limited thereto. For example, the second notification portion 111g2 may be configured by a buzzer. The second notification portion 111g2 is arranged inside the outer cover 111a (refer to FIG. 1), but the arrangement position of the second notification portion 111g2 is not limited to the above. The second notification portion 111g2 may be arranged at a position where the notified sound is easily transmitted to the operator who is positioned away from the vehicle body 10. For example, the second notification portion 111g2 may be arranged outside the outer cover 111a.

The in-vehicle operation device 111h (refer to FIG. 2) is arranged on the inner front side covered by the outer cover 111a. The in-vehicle operation device 111h is configured to include an operation portion 300 that enables the setting related to the remote operation device 200. That is, the operation portion 300 is provided in the traveling machine body 11, and in particular, is provided at a position opposite to the side to which the work machine 12 is attached (back side). A setting to be performed using the operation portion 300 will be described below.

The operation portion 300 is configured by a touch panel. The operation portion 300 enables the setting and displays various types of information of the work vehicle 1 by the touch panel. In order to display the various types of information of the work vehicle 1, a display portion other than the operation portion 300 may be provided in the in-vehicle operation device 111h. In addition, the operation portion 300 is not limited to the above configuration, and may be configured by, for example, a switch, a dial, a lever, or the like.

The in-vehicle operation device 111h includes a key cylinder and a plurality of buttons (both not illustrated) in addition to the operation portion 300. By inserting a key (not illustrated) into the key cylinder and turning the key, the power of the traveling machine body 11 can be turned on and off. In addition, when the buttons are operated, the traveling machine body 11 travels without depending on the operation of the remote operation device 200. Accordingly, even when the wireless communication between the traveling machine body 11 and the remote operation device 200 is interrupted, the traveling machine body 11 can move (leave).

As illustrated in FIGS. 1 to 3, the traveling portion 112 supports the machine body portion 111 such that the machine body portion 111 can travel. Specifically, the traveling portion 112 includes a pair of left and right crawlers 112a. Each of the left and right crawlers 112a includes a track frame 112b extending in the front-back direction. Each track frame 112b is attached to the lower surface of the machine body portion 111. A driving sprocket 112c is arranged as a driving wheel at the front end of the track frame 112b. The power from the electric motor is transmitted to the driving sprocket 112c via the power transmission mechanism included in the traveling drive device 111b. A driven sprocket 112d is arranged as a driven wheel at the back end of the track frame 112b. The driven sprocket 112d is rotatably supported by the track frame 112b. In the track frame 112b, a plurality of rolling wheels 112e are rotatably supported between the driving sprocket 112c and the driven sprocket 112d. A crawler belt 112f is wound around the driving sprocket 112c, the driven sprocket 112d, and the plurality of rolling wheels 112e to form the crawler 112a.

The left and right crawlers 112a are driven by separate electric motors included in the traveling drive device 111b. When the pair of left and right crawlers 112a are simultaneously driven in the same direction, the traveling portion 112 travels straight forward or backward. Whether the traveling portion 112 travels straight forward or backward depends on the rotation direction of the electric motors. For example, when the pair of left and right crawlers 112a are independently driven, the traveling portion 112 turns left or turns right.

In the present embodiment, the crawler 112a has a configuration in which one driving wheel (driving sprocket 112c) and one driven wheel (driven sprocket 112d) are arranged side by side in the front-back direction and the crawler belt 112f is wound around the driving wheel and the driven wheel. However, another configuration may be adopted. For example, the crawler may be of a type in which a crawler belt is wound around one driving wheel and two driven wheels in a triangular shape. Moreover, in the present embodiment, the traveling portion 112 is of a crawler type, but may be of a type other than the crawler type, for example, a wheel type.

### [2. Configuration related to Control of Work Vehicle]

A configuration related to control of the work vehicle 1 will be described with reference to FIG. 4. FIG. 4 is a block diagram schematically illustrating the configuration related to the control of the work vehicle 1. In FIG. 4, components required to describe the features of the present embodiment are illustrated, and common components are not illustrated.

The work vehicle 1 includes a control device 113. In the work vehicle 1, the control device 113 is provided in the traveling machine body 11. The control device 113 is, for example, a computer device that is configured to include an arithmetic device, an input/output portion, and a storage portion 113a. The arithmetic device is, for example, a processor or a microprocessor. The storage portion 113a is a main storage device such as a read only memory (ROM) or a random access memory (RAM). The storage portion 113a may further include an auxiliary storage device such as a hard disk drive (HDD) or a solid state drive (SSD). The storage portion 113a stores various types of programs, data, and the like. The arithmetic device reads out the various types of programs from the storage portion 113a and executes arithmetic processing in accordance with the programs. The programs stored in the storage portion 113a may be provided by, for example, a computer-readable non-volatile recording medium. As another example, the programs may be provided from a program providing server via a communication line such as the Internet.

The cooperation of the above-described hardware and software allows the control device 113 to act as a work mode control portion 113b, a notification control portion 113c, a traveling control portion 113d, and a work machine control portion 113e. The control device 113 may be configured by a single piece of hardware, or may be configured by a plurality of pieces of hardware that can communicate with each other.

As described above, the functional portions 113b to 113e included in the control device 113 may be realized by causing the arithmetic device to execute arithmetic processing in accordance with the programs, that is, by software, but may be realized by another method. At least one of the functional portions 113b to 113e may be realized by using, for example, an application specific integrated circuit (ASIC), a field programmable gate array (FPGA), or the like. That is, at least one of the functional portions 113b to 113e may be realized by hardware using a dedicated IC or the like. Moreover, at least one of the functional portions 113b to 113e may be realized by using both software and hardware. In addition, each of the functional portions 113b to 113e has a conceptual configuration. Therefore, a function executed by one component may be distributed to a plurality of components, or functions of a plurality of components may be integrated into one component.

The work mode control portion 113b sets a work mode (forward work mode, backward work mode) on the basis of an instruction from the operation portion 300 (refer to FIG. 2). A setting of the work mode will be described below. The notification control portion 113c controls the notification portion 111g (first notification portion 111g1, second notification portion 111g2) on the basis of the setting of the work mode set by the work mode control portion 113b.

The traveling control portion 113d controls the traveling drive device 111b (refer to FIG. 1) in accordance with whether the work vehicle 1 travels manually or automatically. More specifically, during manual traveling, the traveling control portion 113d controls the traveling drive device 111b on the basis of a traveling instruction from the remote operation device 200. During automatic traveling, the traveling control portion 113d automatically (autonomously) controls the traveling drive device 111b such that the traveling machine body 11 travels along a predetermined route.

The work machine control portion 113e adjusts a lifting-lowering position (a height from the ground) of the work machine 12 on the basis of a lifting-lowering instruction from the remote operation device 200. Moreover, the work machine control portion 113e controls the PTO power transmission portion to control switching of power transmission to the work machine 12 on the basis of a switching instruction from the remote operation device 200.

The positioning communication unit 114, a communication processing portion 115, and a sensor 116 are connected to the control device 113. That is, the work vehicle 1 (in particular, the traveling machine body 11) includes the positioning communication unit 114, the communication processing portion 115, and the sensor 116.

The positioning communication unit 114 acquires the position of the vehicle body 10 as, for example, information of latitude and longitude by using a positioning signal received by the positioning antenna 111e (refer to FIG. 1) from a positioning satellite. For example, the positioning communication unit 114 receives a positioning signal from a reference station (not illustrated) by an appropriate method, and then performs positioning by using a known real time kinematic GNSS (RTK-GNSS) method. The positioning communication unit 114 outputs the positional information of the vehicle body 10 to the control device 113. The positioning communication unit 114 may perform positioning by using another method, for example, a differential GNSS (DGNSS) method. In addition, the work vehicle 1 may be configured to include, for example, a quantum compass capable of positioning, instead of or in addition to the positioning communication unit 114.

The communication processing portion 115 performs communication with the remote operation device 200 via a communication antenna 115a. The communication antenna 115a is an antenna for performing wireless communication with the remote operation device 200. The wireless communication may be performed using a wireless local area network (LAN) such as Wi-Fi (registered mark).

The sensor 116 detects information related to the vehicle body 10 and outputs the detected information to the control device 113. In the present embodiment, the sensor 116 includes a plurality of types of sensors. Each of the plurality of types of sensors is connected to the control device 113 so as to be able to input a signal. The plurality of types of sensors include, for example, an inertial measurement unit, an obstacle sensor, a speed sensor, and a lifting-lowering position sensor.

The inertial measurement unit is a device that includes a tri-axial angular velocity sensor and a tri-directional acceleration sensor and can measure the attitude of the traveling machine body 11. The obstacle sensor is a sensor that detects an obstacle existing around the vehicle body 10, and may be, for example, an ultrasonic sensor, a camera, a radar, or light detection and ranging (LiDAR). The speed sensor is a sensor that detects the traveling speed of the traveling machine body 11. The lifting-lowering position sensor is a sensor that detects the lifting-lowering position of the work machine 12.

As described above, the work vehicle 1 may have a configuration in which automatic traveling is not performed. In this configuration, the positioning communication unit 114 and some of the sensors 116 (for example, the inertial measurement unit) may be removed. That is, the positioning communication unit 114 and some of the sensors 116 are not essential for the work vehicle 1 (vehicle body 10) to travel by a remote operation.

The operation portion 300 is also connected to the control device 113. More specifically, the control device 113 provided in the traveling machine body 11 and the operation portion 300 are connected to each other using, for example, a connection cable (not illustrated). That is, the operation portion 300 is connected by wire to the control device 113. In a configuration in which the operation portion 300 is connected by wire to the control device 113, for example, a connection failure that occurs between the operation portion 300 and the control device 113 is reduced compared to a configuration in which the operation portion 300 is connected wirelessly to the control device 113.

However, a configuration in which the operation portion 300 is connected wirelessly to the control device 113 may be adopted. Even in this configuration, as long as the operation portion 300 is provided in the traveling machine body 11, the distance of wireless communication is shortened, and the connection failure is reduced compared to, for example, a configuration in which the operation portion 300 is provided in the remote operation device 200, which will be described below.

Therefore, the following configuration is preferable from the viewpoint of reducing the connection failure between the operation portion 300 and a device provided in the traveling machine body 11 (for example, the control device 113) and reliably performing the setting related to the remote operation device 200. That is, as in the present embodiment, the operation portion 300 is preferably provided in the traveling machine body 11. In addition, when the operation portion 300 is provided in the traveling machine body 11, the operation portion 300 does not need to be provided in the remote operation device 200 that is a separate body from the traveling machine body 11, and the remote operation device 200 is configured to be small. Hereinafter, the configuration of the remote operation device 200 will be described.

### [3. Configuration of Remote Operation Device]

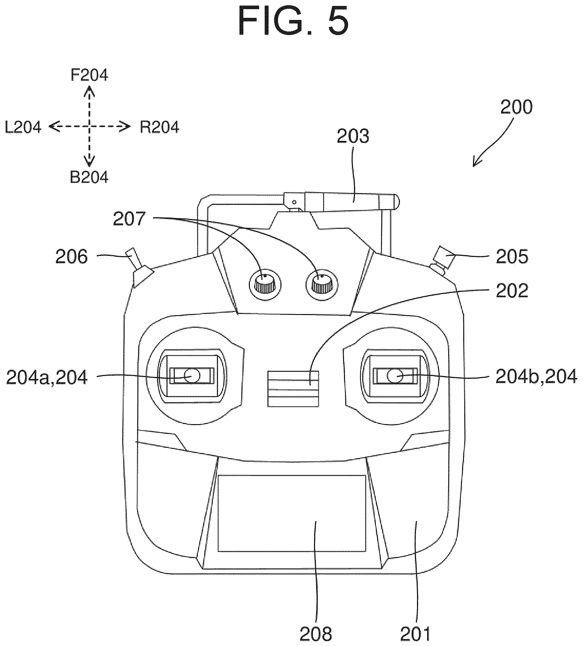

FIG. 5 is a plan view illustrating the configuration of the remote operation device 200. The remote operation device 200 includes a housing 201, a power switch 202, an antenna 203, an operation lever 204, a first operation switch 205, a second operation switch 206, an operation knob 207, and a display portion 208.

The housing 201 configures a body portion of the remote operation device 200. The power switch 202, the antenna 203, the operation lever 204, the first operation switch 205, the second operation switch 206, the operation knob 207, and the display portion 208 described above are attached to appropriate positions of the housing 201. The arrangement illustrated in FIG. 5 is merely an example, and may be changed as appropriate.

The power switch 202 is provided at the center of the front surface of the housing 201, and can turn on and off the power of the remote operation device 200. The power switch 202 is, for example, a seesaw switch. The power of the remote operation device 200 is, for example, a battery, a dry cell, or the like arranged in the housing 201.

The antenna 203 is provided so as to protrude from a side surface (an upper side surface in FIG. 5) of the housing 201, and enables wireless communication with the traveling machine body 11. When the power of the remote operation device 200 is turned on by the power switch 202, the remote operation device 200 can perform wireless communication with the traveling machine body 11. When the power of the remote operation device 200 is turned off by the power switch 202, the remote operation device 200 cannot communicate with the traveling machine body 11. In the present embodiment, when the traveling machine body 11 cannot communicate with the remote operation device 200, the traveling machine body 11 automatically stops traveling. That is, the power switch 202 has a function as an emergency stop switch of the traveling machine body 11.

The emergency stop switch may be provided separately from the power switch 202.

The operation lever 204 enables a traveling operation of the traveling machine body 11 and an operation of the work machine 12. The operation lever 204 has a first operation lever 204a and a second operation lever 204b arranged side by side with the power switch 202 interposed therebetween. The first operation lever 204a (the left lever illustrated in FIG. 5) can be tilted in at least two directions orthogonal to each other, which are indicated by the dashed arrows in FIG. 5 (an F204-B204 direction and an L204-R204 direction). In addition, while the first operation lever 204a is tilted toward one side in the F204-B204 direction, the first operation lever 204a can also be tilted toward one side in the L204-R204 direction. In FIG. 5, the F204 direction is the upward direction, and the B204 direction is the downward direction. Moreover, the L204 direction is the leftward direction, and the R204 direction is the rightward direction. The second operation lever 204b (the right lever illustrated in FIG. 5) can also be tilted in the same directions as the first operation lever 204a.

The first operation lever 204a and the second operation lever 204b fulfill different functions depending on whether the work mode is the forward work mode or the backward work mode. The functions of the first operation lever 204a and the second operation lever 204b will be described below.

The first operation switch 205 is arranged on a side surface (an upper right side surface in FIG. 5) of the housing 201, and enables a plurality of types of settings related to automatic traveling. The plurality of types of settings include, for example, a start setting and an end setting of the automatic traveling. The first operation switch 205 is, for example, a momentary switch that can be pressed down.

The second operation switch 206 is arranged on a side surface (an upper left side surface in FIG. 5) of the housing 201, and is switchable between a state where power transmission to the work machine 12 using the above-described PTO power transmission portion is enabled and a state where the power transmission to the work machine 12 is disabled. The second operation switch 206 is, for example, a toggle switch. The switching of the power transmission to the work machine 12 is performed by the work machine control portion 113e (refer to FIG. 4) controlling the PTO power transmission portion on the basis of the operation of the second operation switch 206 (switching instruction).

The operation knob 207 is arranged on the front surface (an upper side of the front surface in FIG. 5) of the housing 201, and enables adjustment of the maximum speed of the traveling machine body 11. More specifically, two operation knobs 207 are provided. One of the two operation knobs 207 enables adjustment of the maximum speed of the traveling machine body 11 during straight traveling. The other of the two operation knobs 207 enables adjustment of the maximum speed of the traveling machine body 11 during turning traveling.

The display portion 208 is arranged on the front surface (a lower side of the front surface in FIG. 5) of the housing 201, and displays various types of information to be notified to the operator. The various types of information include, for example, a display of a positional relationship between a travel route and the vehicle body 10 during automatic traveling. The display portion 208 is, for example, a liquid crystal display device, an organic EL display device, or the like.

### [4. Setting of Work Mode]

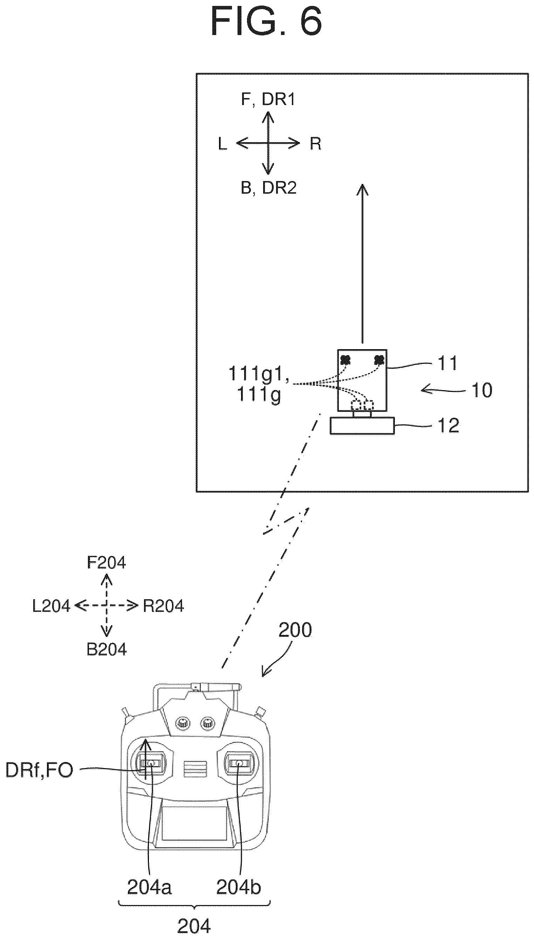

The setting of the work mode (forward work mode, backward work mode) will be described. First, an outline of the work mode will be described. Initially, an outline of the forward work mode will be described with reference to FIG. 6. FIG. 6 is an explanatory diagram for describing the forward work mode.

In the present embodiment, tilting the first operation lever 204a of the remote operation device 200 in the F204 direction is referred to as a forward operation FO. In addition, the F204 direction is referred to as a forward operation direction DRf. Tilting the first operation lever 204a in the B204 direction is referred to as a backward operation. Moreover, tilting the first operation lever 204a in the L204 direction is referred to as a left turning operation, and tilting the first operation lever 204a in the R204 direction is referred to as a right turning operation.

When the forward operation FO is performed in the forward work mode, the traveling machine body 11 can be moved forward. That is, when the first operation lever 204a is tilted in the forward operation direction DRf, the traveling machine body 11 can travel in the first direction DR1. Therefore, in the forward work mode, the forward operation direction DRf corresponds to the first direction DR1, of the first direction DR1 and the second direction DR2.

When the backward operation is performed in the forward work mode, the traveling machine body 11 can be moved backward. When the left turning operation is performed in the forward work mode, the traveling machine body 11 can be turned left. When the right turning operation is performed in the forward work mode, the traveling machine body 11 can be turned right.

Moreover, when the second operation lever 204b is tilted in the F204 direction in the forward work mode, the work machine 12 can be lifted. When the second operation lever 204b is tilted in the B204 direction in the forward work mode, the work machine 12 can be lowered. When the second operation lever 204b is tilted in the L204 direction in the forward work mode, the traveling machine body 11 can be turned left. When the second operation lever 204b is tilted in the R204 direction in the forward work mode, the traveling machine body 11 can be turned right.

The turning radius when the operation is performed with the same operation amount (the operation amount from a neutral position) differs between the turning (left turning, right turning) by the first operation lever 204a and the turning (left turning, right turning) by the second operation lever 204b. More specifically, when the first operation lever 204a and the second operation lever 204b are tilted by the same amount from the neutral position, the traveling machine body 11 can be turned with a larger turning radius when being operated by the second operation lever 204b than when being operated by the first operation lever 204a. In other words, the traveling machine body 11 can be gently turned by the second operation lever 204b.

In the forward work mode, among the first notification portions 111g1 positioned on the front side and the back side of the traveling machine body 11, the first notification portions 111g1 on the front side (refer to also FIG. 2) are turned on (or blinked). Accordingly, the operator is notified that the traveling machine body 11 moves forward by the forward operation FO. The switching between turning on and off of the first notification portions 111g1 is performed by the notification control portion 113c (refer to FIG. 4).

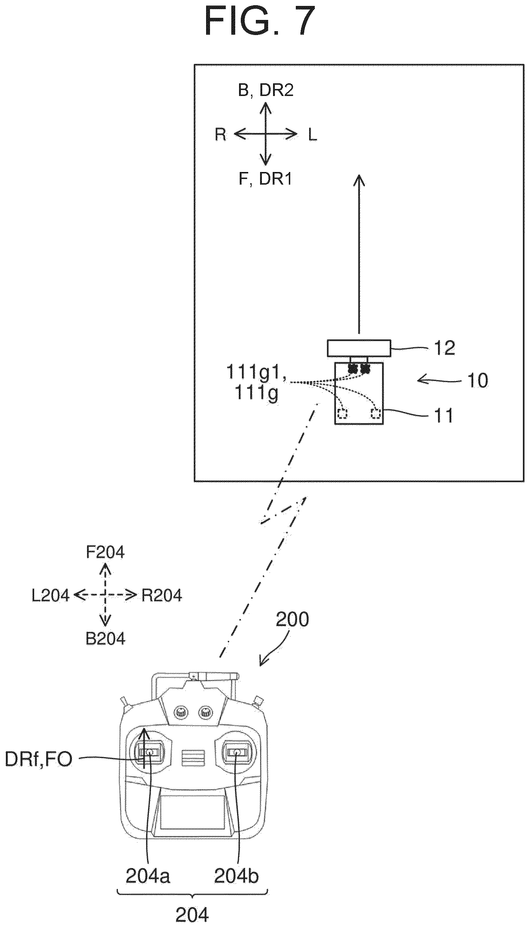

Next, an outline of the backward work mode will be described with reference to FIG. 7. FIG. 7 is an explanatory diagram for describing the backward work mode. Even in the backward work mode, the definition of each operation of the forward operation FO, the backward operation, the left turning operation, and the right turning operation described above is the same. For example, even in the backward work mode, tilting the first operation lever 204a in the F204 direction is referred to as the forward operation FO, and the F204 direction is referred to as the forward operation direction DRf.

When the forward operation FO is performed in the backward work mode, the traveling machine body 11 can be moved backward. That is, when the first operation lever 204a is tilted in the forward operation direction DRf, the traveling machine body 11 can travel in the second direction DR2. Therefore, in the backward work mode, the forward operation direction DRf corresponds to the second direction DR2, of the first direction DR1 and the second direction DR2.

When the backward operation is performed in the backward work mode, the traveling machine body 11 can be moved forward. When the left turning operation is performed in the backward work mode, the traveling machine body 11 can be turned right. When the right turning operation is performed in the backward work mode, the traveling machine body 11 can be turned left. Therefore, when the first operation lever 204a is tilted in the same direction, the traveling direction of the traveling machine body 11 is reversed in the forward work mode and the backward work mode. In other words, the first operation lever 204a fulfills different functions in the forward work mode and the backward work mode.

Moreover, when the second operation lever 204b is tilted in the F204 direction in the backward work mode, the work machine 12 can be lifted. When the second operation lever 204b is tilted in the B204 direction in the backward work mode, the work machine 12 can be lowered. Therefore, for the operation of the second operation lever 204b in the F204 direction or the B204 direction, the same function is fulfilled in both the forward work mode and the backward work mode.

When the second operation lever 204b is tilted in the L204 direction in the backward work mode, the traveling machine body 11 can be turned right. When the second operation lever 204b is tilted in the R204 direction in the backward work mode, the traveling machine body 11 can be turned left. Therefore, for the operation of the second operation lever 204b in the L204 direction or the R204 direction, the traveling direction of the traveling machine body 11 is reversed in the forward work mode and the backward work mode. In other words, different functions are fulfilled. The backward work mode is also the same in that the second operation lever 204b turns the traveling machine body 11 more gently than the first operation lever 204a.

In the backward work mode, among the first notification portions 111g1 positioned on the front side and the back side of the traveling machine body 11, the first notification portions 111g1 on the back side (refer to also FIG. 3) are turned on (or blinked). Accordingly, the operator is notified that the traveling machine body 11 moves backward by the forward operation FO. Therefore, the first notification portions 111g1 give notice of the traveling direction of the traveling machine body 11 by the forward operation FO depending on whether the work mode is set to the forward work mode or the backward work mode.

When the operator who is positioned away from the traveling machine body 11 views the first notification portions 111g1, the operator can easily confirm the traveling direction of the traveling machine body 11 by the forward operation FO. For example, the operator does not need to approach the traveling machine body 11 and confirm the information displayed on the operation portion 300 (touch panel). From this viewpoint, as in the present embodiment, the traveling machine body 11 preferably has the first notification portions 111g1 that give notice of the traveling direction of the traveling machine body 11 by the forward operation FO.

Furthermore, as in the present embodiment, the following configuration is preferable from the viewpoint of reliably realizing the configuration that gives notice of the traveling direction of the traveling machine body 11 by the forward operation FO when the traveling machine body 11 and the work machine 12 are arranged side by side in the front-back direction. That is, the first notification portions 111g1 are preferably provided on the front side and the back side of the traveling machine body 11.

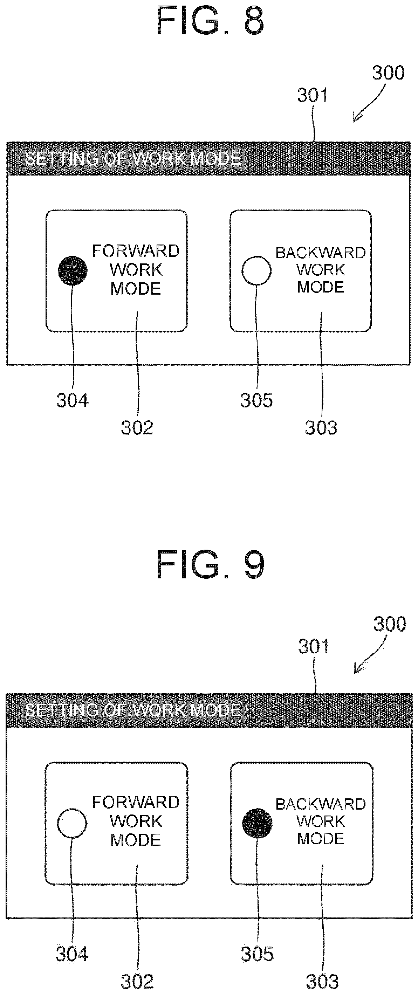

Next, a setting operation of the work mode will be described. First, the setting operation of the forward work mode will be described with reference to FIG. 8. FIG. 8 is an explanatory diagram for describing the setting operation of the forward work mode.

The setting of the forward work mode is performed by operating the operation portion 300. More details are as follows. As described above, the operation portion 300 is configured by a touch panel.

Thus, a screen for performing various settings is displayed on the operation portion 300. The screen includes a work mode setting screen 301. The work mode setting screen 301 includes a forward work mode setting portion 302 and a backward work mode setting portion 303.

When the operator operates (touches) the forward work mode setting portion 302 with a finger or the like, the work mode is set to the forward work mode. The setting of the work mode is performed by the work mode control portion 113b (refer to FIG. 4). When the work mode is set to the forward work mode, a forward work mode display portion 304 included in the forward work mode setting portion 302 is turned on (or blinked). The forward work mode display portion 304 is turned off when the work mode is not the forward work mode, that is, when the work mode is the backward work mode. The backward work mode setting portion 303 and a backward work mode display portion 305 included in the backward work mode setting portion 303 will be described below.

Next, the setting operation of the backward work mode will be described with reference to FIG. 9. FIG. 9 is an explanatory diagram for describing the setting operation of the backward work mode.

Similarly to the setting of the forward work mode, the setting of the backward work mode is performed by operating the operation portion 300. More specifically, when the operator operates (touches) the backward work mode setting portion 303 with a finger or the like, the work mode is set to the backward work mode. The setting of the work mode is performed by the work mode control portion 113b. When the work mode is set to the backward work mode, the backward work mode display portion 305 is turned on (or blinked). The backward work mode display portion 305 is turned off when the work mode is not the backward work mode, that is, when the work mode is the forward work mode. Accordingly, the work mode is set to either the forward work mode or the backward work mode by operating the operation portion 300. That is, the operation portion 300 is capable of setting the forward operation direction DRf to either the first direction DR1 or the second direction DR2.

According to the above configuration, depending on the type of the work machine 12, the operator can select which of the first direction DR1 and the second direction DR2 the forward operation direction DRf of the remote operation device 200 is set to. That is, regardless of the type of the work machine 12, the forward operation direction DRf can be made to correspond to the traveling direction of the work. Accordingly, the operator can perform operations without confusion, and erroneous operations can be reduced. In addition, when the forward operation direction DRf corresponds to the traveling direction of the work, matters that require attention during operations are reduced, and a feeling of fatigue is lessened. Accordingly, a feeling of fatigue can be lessened, and erroneous operations can be reduced in remote operations.

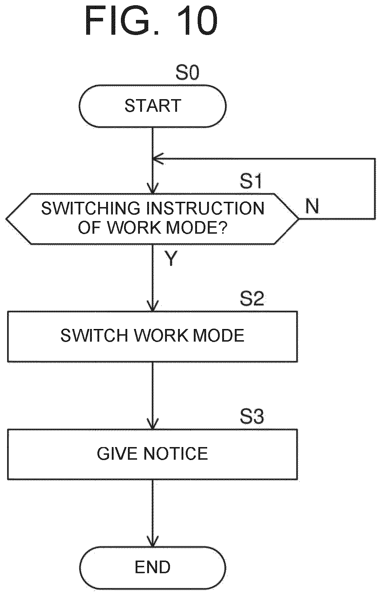

Here, a flow of a setting when the work mode is switched from one to the other of the forward work mode and the backward work mode will be described with reference to FIG. 10. FIG. 10 is a flowchart illustrating a flow of a switching setting of the work mode. In step S0, it is assumed that the work mode is set to the forward work mode.

In step S1, the work mode control portion 113b (refer to FIG. 4) determines whether there is a switching instruction of the work mode. In the present embodiment, the switching instruction is realized by the operator operating (touching) the backward work mode setting portion 303 of the work mode setting screen 301 with a finger or the like (refer to FIG. 9). When there is a switching instruction (Yes in step S1), the processing proceeds to next step S2. When there is not a switching instruction (No in step S1), the work mode control portion 113b continues the determination of a switching instruction.

In step S2, the work mode control portion 113b switches the work mode from the forward work mode to the backward work mode. Accordingly, the work mode is set to the backward work mode.

When the work mode is switched, the processing proceeds to next step S3.

In step S3, the notification control portion 113c (refer to FIG. 4) controls at least one of the first notification portion 111g1 and the second notification portion 111g2 (refer to FIG. 1) to give notice. That is, at least one of the first notification portion 111g1 and the second notification portion 111g2 gives notice when the setting of the work mode (the setting of the forward operation direction DRf) is switched. In the present embodiment, the notification control portion 113c rings only the second notification portion 111g2 (a speaker as auditory notifying means). However, instead of the second notification portion 111g2, the notification control portion 113c may blink (or turn on) the first notification portion 111g1 (a lamp as visual notifying means). In addition, the notification control portion 113c may blink (or turn on) the first notification portion 111g1 while ringing the second notification portion 111g2.

In step S0, the work mode may be set to the backward work mode.

In this case, the work mode is switched from the backward work mode to the forward work mode by the switching setting. In addition, the switching instruction in this case is realized by operating the forward work mode setting portion 302 of the work mode setting screen 301 (refer to FIG. 8).

Preferably, notification is performed when the setting of the work mode, that is, the setting of the forward operation direction DRf is switched, and the operator reliably recognizes that the switching setting has been performed. In addition, at the time of the notification, appropriate notifying means is preferably used depending on the positional relationship between the work vehicle 1 and the operator, the work environment in which the work vehicle 1 is used, or the like. From this viewpoint, as in the present embodiment, the traveling machine body 11 preferably has the second notification portion 111g2 that gives notice by means different from the first notification portion 111g1. At least one of the first notification portion 111g1 and the second notification portion 111g2 preferably gives notice when the setting of the forward operation direction DRf is switched.

### [5. Modification of Configuration of Remote Operation Device]

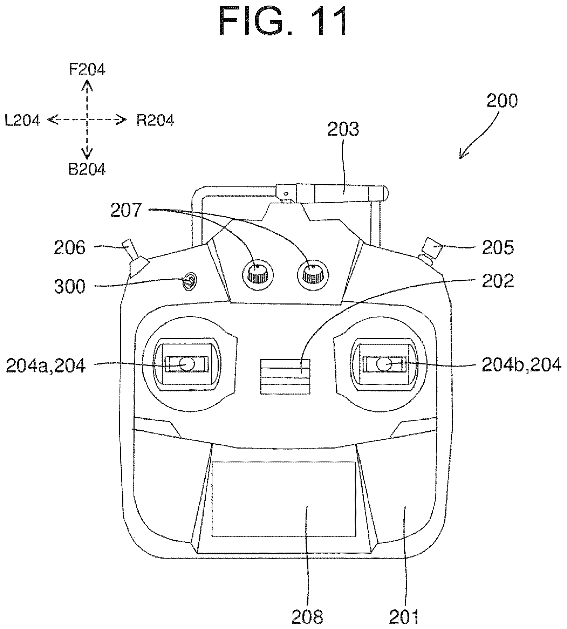

A modification of the configuration of the remote operation device 200 will be described with reference to FIG. 11. FIG. 11 is a plan view illustrating the modification of the configuration of the remote operation device 200. The remote operation device 200 illustrated in FIG. 11 has the same configuration as that of the remote operation device 200 illustrated in FIG. 5 except that the operation portion 300 is included.

In the present modification, the operation portion 300 is arranged on the front surface (an upper left side of the front surface in FIG. 11) of the housing 201. The operation portion 300 is configured by a momentary toggle switch, and can be tilted in the F204 direction or the B204 direction. The operation portion 300 is not limited to the above configuration, and may be configured by, for example, an alternate toggle switch, a dial, a lever, or the like. Moreover, the display portion 208 may be configured to include a touch panel, and the display portion 208 may be used as the operation portion 300.

The setting of the work mode is performed by operating the operation portion 300. For example, when the operation portion 300 is tilted in the F204 direction in a state where the work mode is set to the backward work mode, the work mode is set to the forward work mode. The setting of the work mode is performed by the work mode control portion 113b (refer to FIG. 4). Accordingly, the forward operation direction DRf is set to the first direction DR1 (refer to FIG. 6). On the other hand, when the operation portion 300 is tilted in the B204 direction in a state where the work mode is set to the forward work mode, the work mode is set to the backward work mode. Accordingly, the forward operation direction DRf is set to the second direction DR2 (refer to FIG. 7). In other words, even in a configuration in which the operation portion 300 is provided in the remote operation device 200, the forward operation direction DRf is set to either the first direction DR1 or the second direction DR2 by operating the operation portion 300. Therefore, from the viewpoint of setting the forward operation direction DRf even by the operator who is positioned away from the traveling machine body 11, as in the present modification, the operation portion 300 is preferably provided in the remote operation device 200. A configuration in which the operation portions 300 are provided in both the traveling machine body 11 and the remote operation device 200 may be adopted.

### [6. Modification of Configuration of Machine Body Portion]

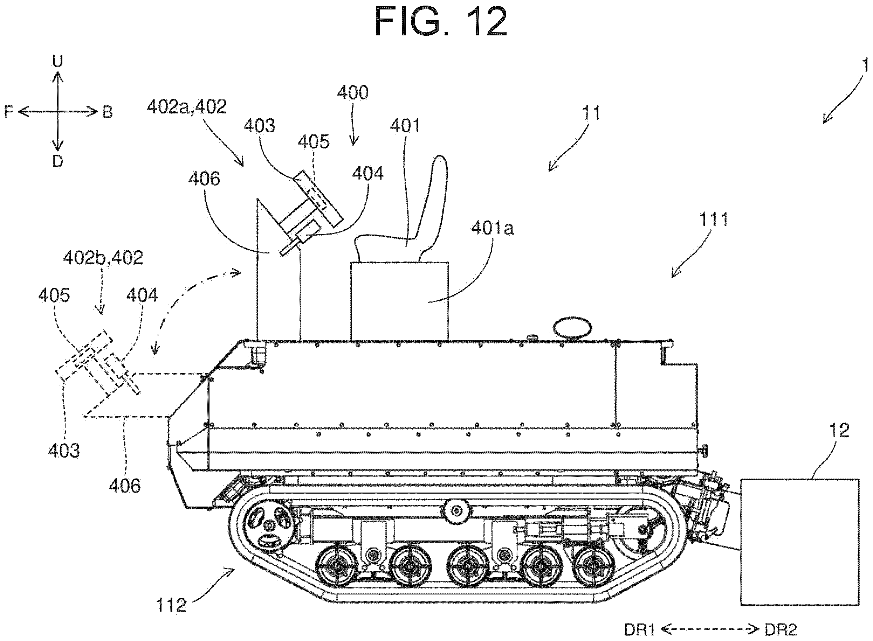

The present invention can also be applied to the work vehicle 1 including a driving portion 400 that enables an operation of the work vehicle 1, in addition to the remote operation device 200 and the operation portion 300 described above. Hereinafter, as a modification of the configuration of the work vehicle 1 (in particular, the machine body portion 111), a configuration in which the machine body portion 111 includes the driving portion 400 will be described with reference to FIG. 12. FIG. 12 is a diagram illustrating the modification of the configuration of the machine body portion 111. The machine body portion 111 illustrated in FIG. 12 has the same configuration as that of the machine body portion 111 illustrated in FIG. 1 and the like except that the driving portion 400 is included. In addition, in the work vehicle 1 illustrated in FIG. 12, the respective parts other than the machine body portion 111, that is, the traveling portion 112, the work machine 12, and the remote operation device 200 also have the same configurations as those of the respective parts illustrated in FIG. 1 and the like. In FIG. 12, the positioning antenna 111e, the state indication light 111f, the remote operation device 200, and the like are not illustrated.

The driving portion 400 is provided in the upper part of the machine body portion 111. The driving portion 400 includes a driver's seat 401 and a steering portion 402.

The driver's seat 401 is provided for the operator to sit on when the operator gets in the traveling machine body 11 and operates the traveling machine body 11. The driver's seat 401 is attached to the machine body portion 111 via a seat mount 401a. The seat mount 401a is fixed to the upper part of the machine body portion 111 and supports the driver's seat 401 from below. The seat mount 401a is configured by, for example, a box-shaped metallic member. The steering portion 402 is provided in front of the driver's seat 401 and enables a steering operation of the traveling machine body 11.

In addition to the driver's seat 401 and the steering portion 402, for example, a lever, a pedal, and the like to be operated by the operator (in particular, the operator who sits on the driver's seat 401) are provided in the driving portion 400. The lever may include a plurality of types of levers, and may include, for example, a main speed change lever and an auxiliary speed change lever that enable adjustment of the maximum speed of the traveling machine body 11, a work machine operation lever that enables an operation of the work machine 12, and the like. Moreover, the pedal may include a plurality of types of pedals, and may include, for example, an accelerator pedal and a brake pedal that enable acceleration and deceleration of the traveling machine body 11. Hereinafter, details of the configuration of the steering portion 402 will be described.

The steering portion 402 is configured to include a steering wheel 403, a travel lever 404, an instrument panel 405, and a steering column 406.

The steering wheel 403 is rotatably attached to the upper end portion of the steering column 406. The steering wheel 403 enables a steering operation of the traveling machine body 11. The configuration of the steering wheel 403 will be described below. A steering sensor (not illustrated) that detects the operation amount of the steering wheel 403 is provided inside the steering column 406. The steering sensor is configured by, for example, a potentiometer. The steering sensor is connected to the control device 113 (refer to FIG. 4), and outputs the detected operation amount of the steering wheel 403 to the control device 113. The arrangement position of the steering sensor is not limited to inside the steering column 406, and may be, for example, inside the machine body portion 111.

The travel lever 404 is provided so as to protrude from the left side of the steering column 406. The travel lever 404 enables a traveling operation (forward operation, backward operation) of the traveling machine body 11.

The instrument panel 405 is attached to the upper part of the steering column 406 via an attachment member (not illustrated). The instrument panel 405 is configured to include, for example, a liquid crystal display device, an organic EL display device, or the like, and displays a meter indicating the speed of the traveling machine body 11, or the like. The instrument panel 405 may be provided with a button for changing the type of information to be displayed, or the like.

A base end portion (a portion on the side opposite to the side on which the steering wheel 403 is attached) of the steering column 406 is supported on the front portion of the machine body portion 111 so as to be rotatable about a rotation axis extending in the left-right direction. When the steering column 406 rotates, the steering wheel 403, the travel lever 404, and the instrument panel 405 attached to the steering column 406 also rotate together with the steering column 406. In other words, the steering portion 402 is rotatably attached to the machine body portion 111.

Specifically, the position of the steering portion 402 can be changed between a getting-in operation position 402a (indicated by the solid line in FIG. 12) and a getting-out operation position 402b (indicated by the dashed line in FIG. 12). The steering portion 402 at the getting-in operation position 402a is positioned to protrude upward with respect to the machine body portion 111.

In this case, the operator sits on the driver's seat 401 and operates the steering wheel 403 and the travel lever 404 included in the steering portion 402.

The steering portion 402 at the getting-out operation position 402b is positioned to protrude forward with respect to the machine body portion 111. In this case, the operator gets out of the traveling machine body 11 and operates the steering wheel 403 and the travel lever 404. More specifically, the operator operates the steering wheel 403 and the travel lever 404 while facing backward on the front side of the traveling machine body 11 with respect to the steering portion 402 arranged at the getting-out operation position 402b.

The position of the steering portion 402 may be changed to another position in addition to the getting-in operation position 402a and the getting-out operation position 402b. For example, the position of the steering portion 402 may be changed to any position between the getting-in operation position 402a and the getting-out operation position 402b. In addition, the position of the steering portion 402 may be changed to a position below the getting-out operation position 402b.

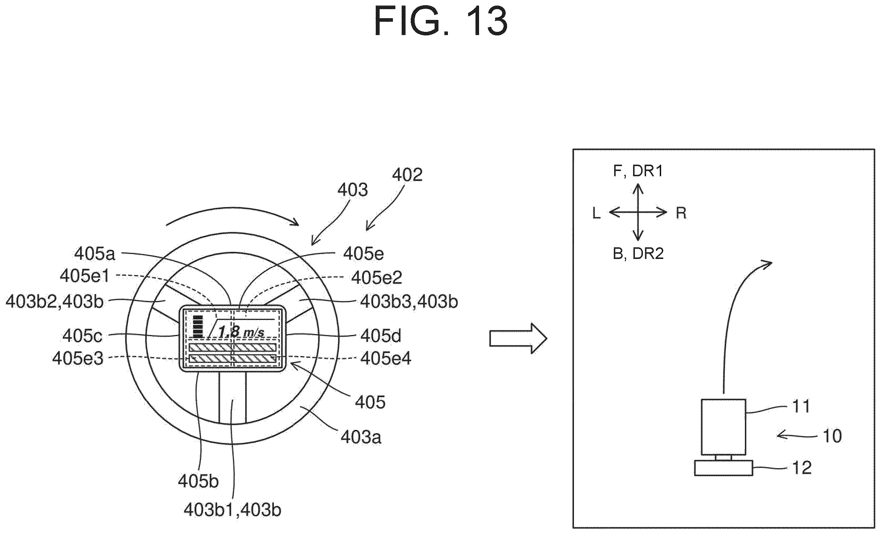

The turning direction of the traveling machine body 11 for the operation of the steering wheel 403 is different between when the steering portion 402 is arranged at the getting-in operation position 402a and when the steering portion 402 is arranged at the getting-out operation position 402b. Moreover, the direction of the meter or the like that the instrument panel 405 displays is also different. More details are as follows. First, a case where the steering portion 402 is arranged at the getting-in operation position 402a will be described with reference to FIG. 13. FIG. 13 is an explanatory diagram for describing the steering operation when the steering portion 402 is arranged at the getting-in operation position 402a. FIG. 13 illustrates the steering wheel 403 and the instrument panel 405 as viewed from the operator who sits on the driver's seat 401, and the traveling state of the traveling machine body 11. A screen 405e of the instrument panel 405 illustrated in FIG. 13 is merely an example, and may be changed as appropriate.

The steering wheel 403 is formed of, for example, a resin. The steering wheel 403 integrally has an annular wheel portion 403a and a spoke portion 403b extending from the wheel portion 403a toward the center side of the wheel portion 403a. The spoke portion 403b includes a first spoke portion 403b1, a second spoke portion 403b2, and a third spoke portion 403b3. The first spoke portion 403b1 extends from a lower side toward the center side of the wheel portion 403a. The second spoke portion 403b2 extends from an obliquely upper left side toward the center side of the wheel portion 403a. The third spoke portion 403b3 extends from an obliquely upper right side toward the center side of the wheel portion 403a. Here, in the steering wheel 403, the above-described position is referred to as a neutral position. When the steering wheel 403 is in the neutral position, the traveling machine body 11 can travel straight without being turned. In addition, since the spoke portion 403b is integrally formed with the wheel portion 403a, for example, when the operator holds and turns the wheel portion 403a, the spoke portion 403b is also rotationally moved.

The configuration of the steering wheel 403 is not limited to the above. For example, the steering wheel 403 may be configured to have an elliptical wheel portion. In addition, the number of the spoke portions 403b of the steering wheel 403 may be one, two, or four or more.

The instrument panel 405 is arranged substantially at the center of the steering wheel 403. The instrument panel 405 has a rectangular shape, and is positioned with its longitudinal direction along the lateral direction. More specifically, in the instrument panel 405, an upper edge portion 405a is positioned on the upper side and a lower edge portion 405b is positioned on the lower side as viewed from the operator who sits on the driver's seat 401. Moreover, a left edge portion 405c is positioned on the left side, and a right edge portion 405d is positioned on the right side.

The arrangement of the instrument panel 405 is not limited to the above. For example, the instrument panel 405 may be positioned with its longitudinal direction along the vertical direction. In addition, the instrument panel 405 may be arranged so as to be shifted from the center of the steering wheel 403.

The instrument panel 405 displays the screen (image) 405e in the following directions. That is, the instrument panel 405 displays the upper part of the screen 405e (upper left part 405e1, upper right part 405e2) on the upper side, and displays the lower part of the screen 405e (lower left part 405e3, lower right part 405e4) on the lower side as viewed from the operator. Moreover, the instrument panel 405 displays the left part of the screen 405e (upper left part 405e1, lower left part 405e3) on the left side, and displays the right part of the screen 405e (upper right part 405e2, lower right part 405e4) on the right side as viewed from the operator.

When the steering portion 402 is arranged at the getting-in operation position 402a, the traveling machine body 11 can be turned right by turning the steering wheel 403 clockwise from the neutral position. More specifically, the operation amount of the steering wheel 403 is detected by the steering sensor and is output to the control device 113. Then, the traveling control portion 113d of the control device 113 (refer to FIG. 4) controls the traveling drive device 111b (refer to FIG. 1) on the basis of the operation amount, so that the traveling machine body 11 is turned right. In other words, in the work vehicle 1 of the present modification, steering is performed by a steer-by-wire steering device. When the steering portion 402 is arranged at the getting-in operation position 402a, the traveling machine body 11 can be turned left by turning the steering wheel 403 counterclockwise from the neutral position.

When the steering portion 402 is arranged at the getting-in operation position 402a, the traveling machine body 11 can be moved forward by tilting the travel lever 404 (refer to FIG. 12) toward the front of the traveling machine body 11 (in the F direction in FIG. 12). When the steering portion 402 is arranged at the getting-in operation position 402a, the traveling machine body 11 can be moved backward by tilting the travel lever 404 toward the back of the traveling machine body 11 (in the B direction in FIG. 12).

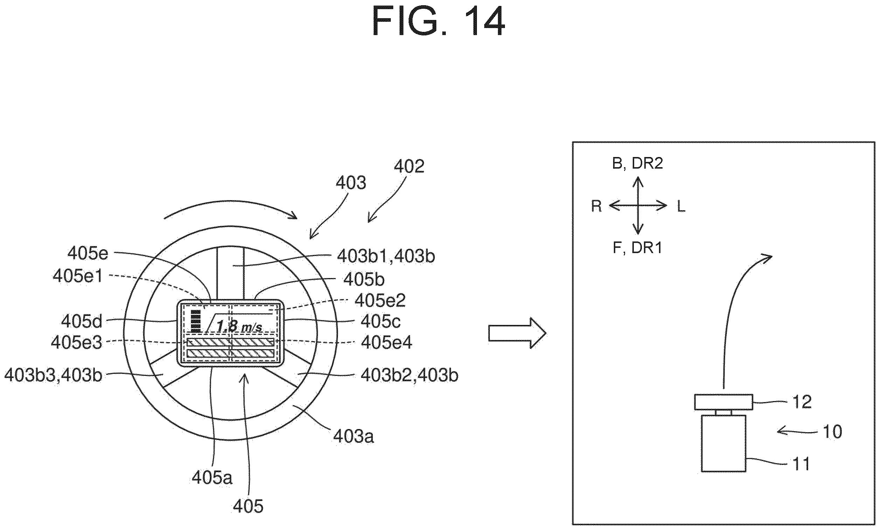

Next, a case where the steering portion 402 is arranged at the getting-out operation position 402b will be described with reference to FIG. 14. FIG. 14 is an explanatory diagram for describing the steering operation when the steering portion 402 is arranged at the getting-out operation position 402b. FIG. 14 illustrates the steering wheel 403 and the instrument panel 405 as viewed from the operator who faces backward on the front side of the traveling machine body 11 with respect to the steering portion 402 arranged at the getting-out operation position 402b. FIG. 14 also illustrates the traveling state of the traveling machine body 11. Similarly to FIG. 13, the screen 405e of the instrument panel 405 illustrated in FIG. 14 is also merely an example, and may be changed as appropriate.

In the state where the steering portion 402 is arranged at the getting-out operation position 402b, the steering wheel 403 appears as follows as viewed from the operator who is positioned in front of the traveling machine body 11 with respect to the steering portion 402 and faces backward. That is, the steering wheel 403 appears to be horizontally and vertically flipped compared to when the operator sits on the driver's seat 401 in the state where the steering portion 402 is arranged at the getting-in operation position 402a. More specifically, the first spoke portion 403b1 extends from the lower side in FIG. 13, but extends from an upper side of the wheel portion 403a. Moreover, the second spoke portion 403b2 extends from the obliquely upper left side in FIG. 13, but extends from an obliquely lower right side of the wheel portion 403a. Furthermore, the third spoke portion 403b3 extends from the obliquely upper right side in FIG. 13, but extends from an obliquely lower left side of the wheel portion 403a.

Similarly, the instrument panel 405 also appears to be horizontally and vertically flipped compared to when the operator sits on the driver's seat 401 in the state where the steering portion 402 is arranged at the getting-in operation position 402a. That is, in the instrument panel 405, the upper edge portion 405a is positioned on the lower side and the lower edge portion 405b is positioned on the upper side as viewed from the operator who is positioned in front of the traveling machine body 11 with respect to the steering portion 402. Moreover, the left edge portion 405c is positioned on the right side, and the right edge portion 405d is positioned on the left side.

In contrast, the screen (image) 405e of the instrument panel 405 is displayed in the same direction as when the operator sits on the driver's seat 401 in the state where the steering portion 402 is arranged at the getting-in operation position 402a. That is, the instrument panel 405 displays the upper part of the screen 405e (upper left part 405e1, upper right part 405e2) on the upper side, and displays the lower part of the screen 405e (lower left part 405e3, lower right part 405e4) on the lower side as viewed from the operator. Moreover, the instrument panel 405 displays the left part of the screen 405e (upper left part 405e1, lower left part 405e3) on the left side, and displays the right part of the screen 405e (upper right part 405e2, lower right part 405e4) on the right side as viewed from the operator.

In other words, when the steering portion 402 is arranged at the getting-out operation position 402b, the instrument panel 405 displays the screen 405e with the screen 405e horizontally and vertically flipped compared to when the steering portion 402 is arranged at the getting-in operation position 402a. Accordingly, regardless of whether the steering portion 402 is arranged at the getting-in operation position 402a or the getting-out operation position 402b, the operator who operates the traveling machine body 11 with the steering wheel 403 can easily read the information (for example, the speed) on the screen 405e.

When the steering portion 402 is arranged at the getting-out operation position 402b, the traveling machine body 11 can be turned left by turning the steering wheel 403 clockwise from the neutral position. More specifically, the traveling control portion 113d of the control device 113 controls the traveling drive device 111b on the basis of the steering amount of the steering wheel 403 detected by the steering sensor, so that the traveling machine body 11 is turned left. When the steering portion 402 is arranged at the getting-out operation position 402b, the traveling machine body 11 can be turned right by turning the steering wheel 403 counterclockwise from the neutral position.

As described above, when the steering portion 402 is arranged at the getting-in operation position 402a, the traveling machine body 11 is turned right by turning the steering wheel 403 clockwise from the neutral position, and the traveling machine body 11 is turned left by turning the steering wheel 403 counterclockwise from the neutral position. Therefore, when the steering portion 402 is arranged at the getting-out operation position 402b, the turning direction of the traveling machine body 11 for the operation of the steering wheel 403 is inverted compared to when the steering portion 402 is arranged at the getting-in operation position 402a. More specifically, in the traveling control portion 113d, a setting of inverting the turning direction of the traveling machine body 11 is performed depending on whether the steering portion 402 is arranged at the getting-out operation position 402b.

Accordingly, regardless of whether the steering portion 402 is arranged at the getting-in operation position 402a or the getting-out operation position 402b, the operator who operates the traveling machine body 11 with the steering portion 402 can perform the same steering operation. That is, when the steering wheel 403 is turned clockwise, the traveling machine body 11 can be turned right as viewed from the operator. Moreover, when the steering wheel 403 is turned counterclockwise, the traveling machine body 11 can be turned left as viewed from the operator. Therefore, the operator can perform operations without confusion, and erroneous operations are reduced.

When the steering portion 402 is arranged at the getting-out operation position 402b, the traveling machine body 11 can be moved forward by tilting the travel lever 404 (refer to FIG. 12) toward the front of the traveling machine body 11 (in the F direction in FIG. 12). When the steering portion 402 is arranged at the getting-out operation position 402b, the traveling machine body 11 can be moved backward by tilting the travel lever 404 toward the back of the traveling machine body 11 (in the B direction in FIG. 12). Accordingly, regardless of whether the steering portion 402 is arranged at the getting-in operation position 402a or the getting-out operation position 402b, the operator who operates the traveling machine body 11 with the steering portion 402 can perform the same traveling operation. That is, when the travel lever 404 is tilted to the back side as viewed from the operator, the traveling machine body 11 can travel forward from the operator. Moreover, when the travel lever 404 is tilted to the front side as viewed from the operator, the traveling machine body 11 can travel backward from the operator.

### [7. Supplementary Notes]

The work vehicle 1 described in the present embodiment can also be expressed as a work vehicle described in the following supplementary notes.

A work vehicle of supplementary note (1) includes:
a traveling machine body;
a work machine connected to the traveling machine body;
a remote operation device that operates the traveling machine body; and
an operation portion capable of setting a direction of a forward operation of the remote operation device to either a first direction from the work machine toward the traveling machine body or a second direction from the traveling machine body toward the work machine.

A work vehicle of supplementary note (2) is characterized in that, in the work vehicle according to supplementary note (1),
the traveling machine body has a first notification portion that gives notice of a traveling direction of the traveling machine body by the forward operation.

A work vehicle of supplementary note (3) is characterized in that, in the work vehicle according to supplementary note (2),
the traveling machine body and the work machine are arranged side by side in a front-back direction,
the first notification portion is one of a plurality of first notification portions that give notice of the traveling direction of the traveling machine body by the forward operation, and
the plurality of first notification portions are provided on a front side and a back side of the traveling machine body.

A work vehicle of supplementary note (4) is characterized in that, in the work vehicle according to supplementary note (2) or (3),
the traveling machine body has a second notification portion that gives notice by means different from the first notification portion, and
at least one of the first notification portion and the second notification portion gives notice when a setting of the direction of the forward operation is switched.

A work vehicle of supplementary note (5) is characterized in that, in the work vehicle according to any one of supplementary notes (1) to (4),
the operation portion is provided in the traveling machine body.

A work vehicle of supplementary note (6) is characterized in that, in the work vehicle according to any one of supplementary notes (1) to (4),
the operation portion is provided in the remote operation device.

The embodiments of the present invention have been described above, but the scope of the present invention is not limited thereto, and may be expanded or modified without departing from the gist of the invention. In addition, the multiple embodiments and modifications described in the present description may be combined to the extent possible.

### INDUSTRIAL APPLICABILITY

The present invention is applicable to a work vehicle such as an agricultural machine and a construction machine.

### REFERENCE SIGNS LIST

1 work vehicle
11 traveling machine body
12 work machine
111g1 first notification portion
111g2 second notification portion
200 remote operation device
300 operation portion
DR1 first direction
DR2 second direction
DRf forward operation direction (direction of forward operation)
FO forward operation

## Claims

1. A work vehicle comprising:
a traveling machine body;
a work machine connected to the traveling machine body;
a remote operation device that operates the traveling machine body; and
an operation portion capable of setting a direction of a forward operation of the remote operation device to either a first direction from the work machine toward the traveling machine body or a second direction from the traveling machine body toward the work machine.

2. The work vehicle according to claim 1, wherein
the traveling machine body has a first notification portion that gives notice of a traveling direction of the traveling machine body by the forward operation.

3. The work vehicle according to claim 2, wherein
the traveling machine body and the work machine are arranged side by side in a front-back direction,
the first notification portion is one of a plurality of first notification portions that give notice of the traveling direction of the traveling machine body by the forward operation, and
the plurality of first notification portions are provided on a front side and a back side of the traveling machine body.

4. The work vehicle according to claim 2, wherein
the traveling machine body has a second notification portion that gives notice by a unit different from the first notification portion, and
at least one of the first notification portion and the second notification portion gives notice when a setting of the direction of the forward operation is switched.

5. The work vehicle according to any one of claims 1 to 4, wherein
the operation portion is provided in the traveling machine body.

6. The work vehicle according to any one of claims 1 to 4, wherein
the operation portion is provided in the remote operation device.
